# EUROPEAN PATENT APPLICATION

(11) **EP 4 517 935 A1**
(43) Date of publication of application: **05.03.2025**
(21) Application number: 23907428.9
(22) Date of filing: 14.11.2023
(51) Int. Cl.: H01M 10/617, H01M 10/6571, H01M 10/48, H01M 50/20

(54) **BATTERY MODULE AND BATTERY PACK INCLUDING SAME**

(30) Priority: 21.12.2022 KR 20220180416
(71) Applicant: LG Energy Solution, Ltd., Seoul 07335 (KR)
(72) Inventor: PARK, Jinsoo, Daejeon 34122 (KR); JO, Jonghyun, Daejeon 34122 (KR); BAE, Gyujong, Daejeon 34122 (KR); LEE, Hansol, Daejeon 34122 (KR); JANG, Yeongik, Daejeon 34122 (KR)
(74) Representative: Plasseraud IP
(86) International application number: PCT/KR2023/018298
(87) International publication number: WO 2024/136142

(57) **Abstract**

A battery module according to an embodiment of the present disclosure includes a battery cell stack in which a plurality of battery cells is stacked, a module case configured to accommodate the battery cell stack, a film heater provided between the module case and an outermost peripheral battery cell of the battery cell stack, and a dummy battery cell disposed between the film heater and the outermost peripheral battery cell.

## Description

### [Technical Field]

### CROSS-REFERENCE TO RELATED APPLICATION

This application claims priority to and the benefit of Korean Patent Application No. 10-2022-0180416 filed in the Korean Intellectual Property Office on December 21, 2022, the entire contents of which are incorporated herein by reference.

The present disclosure relates to a battery module and a battery pack including the same, and more particularly, to a battery module, in which an environmental deviation between battery cells is reduced, and a battery pack including the same.

### [Background Art]

Secondary batteries are attracting much attention as energy sources for various products such as mobile devices and electric vehicles. Such secondary batteries are considered as valuable energy resources that may replace fossil fuel used for products in the related art. The secondary batteries are in the limelight as environmental-friendly energy sources because the secondary batteries produce no by-product when energy is used.

Recently, the secondary battery is required to be used as an energy storage source and needs to have a secondary battery structure with a high capacity, as a result of which there is an increasing demand for a battery pack having a multi-module structure in which multiple battery modules are assembled and each have a plurality of secondary batteries connected in series and/or in parallel.

Meanwhile, generally, in order to make a battery pack by connecting the plurality of battery cells in series/in parallel, the battery module having at least one battery cell is made first, and then the battery pack is made by using at least one battery module and adding other constituent elements.

The battery module includes a battery cell stack made by stacking a plurality of battery cells, a module case configured to accommodate the battery cell stack, and a compression pad provided between the module case and an outermost peripheral battery cell of the battery cell stack or between the plurality of battery cells.

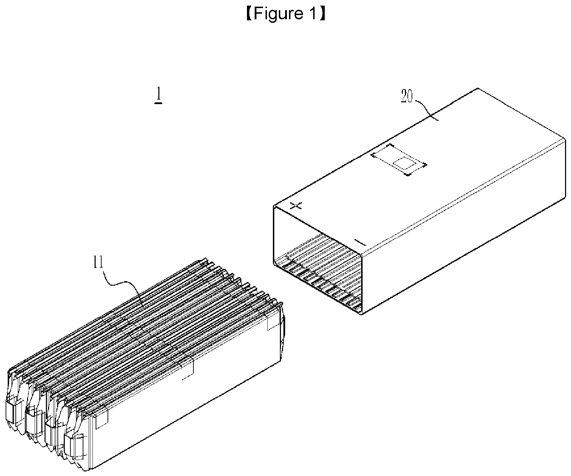

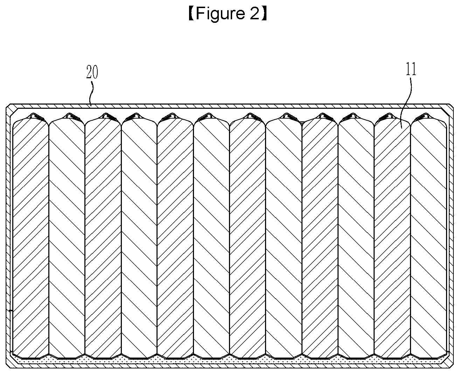

FIG. 1 is a view illustrating a battery module in the related art. FIG. 2 is a view illustrating a cross-section of the battery module in FIG. 1.

In a battery module 1 in the related art, an outermost peripheral battery cell of a battery cell stack made by stacking a plurality of battery cells 11 is positioned while being in direct contact with a module case 20. **In** this case, when the number of battery cells 11, which constitute the battery module 1, is increased, a performance deviation occurs for each of the battery cells 11 disposed in the battery module 1, and the performance deviation ultimately and inevitably affects the performance of the battery pack made by connecting the battery modules in parallel or series.

Because the battery cell 11 is a heat generation element, a temperature of the battery cell 11 is raised when tests related to outputs, rapid charging, lifespans, and the like are performed. However, because one surface of the battery cell, which is positioned at the outermost periphery in the battery module 1, is in contact with the module case 20 of the battery module instead of the cell, the effect of the temperature, which affects the performance of the battery cell, is lower than that of a battery cell positioned at a center of the battery module. For this reason, the performance of the battery module 1 may be determined depending on the outermost peripheral cell. As a result, the performance of the battery module may generally deteriorate.

### [Disclosure]

### [Technical Problem]

The present disclosure attempts to provide a battery module, which is capable of minimizing a performance deviation and a temperature deviation between battery cells caused by positions in a battery module, and a battery pack including the same.

Technical problems of the present disclosure are not limited to the aforementioned technical problems, and other technical problems, which are not mentioned above, may be clearly understood by those skilled in the art from the following descriptions.

### [Technical Solution]

In order to achieve the above-mentioned object, a battery module according to an embodiment of the present disclosure includes a battery cell stack in which a plurality of battery cells is stacked, a module case configured to accommodate the battery cell stack, a film heater provided between the module case and an outermost peripheral battery cell of the battery cell stack, and a dummy battery cell disposed between the film heater and the outermost peripheral battery cell.

The dummy battery cell may have the same configuration as the plurality of battery cells and may not be electrically connected to the plurality of battery cells.

The dummy battery cell may not be charged or discharged.

The battery module may further include a first temperature sensor attached to the dummy battery cell.

The battery module may further include a second temperature sensor attached to the battery cell disposed at an innermost side among the plurality of battery cells.

The battery module may further include a controller configured to control a first temperature measured by the first temperature sensor and a second temperature measured by the second temperature sensor so that the first and second temperatures are equally maintained.

The controller may be connected to the film heater and heat the film heater on the basis of a result of monitoring the first and second temperatures.

Pressure applied to each of the plurality of battery cells may be equal to one another.

The film heater may be configured as at least one a carbon element, a copper foil busbar, a silver busbar, a base PET film, and a Laminex film that are heat generation elements.

According to another embodiment of the present disclosure, a battery pack may include at least one battery module described above.

### [Advantageous Effects]

According to the battery module and the battery pack including the same according to the embodiment of the present disclosure, the dummy battery cell, which is not charged or discharged, may be disposed at a position of the outermost peripheral battery cell having a relatively low temperature among the battery cells, the film heater may be disposed on the dummy battery cell, and the temperature sensor may be used to uniformly maintain the temperatures between the dummy battery cell and the center battery cell, such that the temperature and pressure of the battery cells may be uniformly maintained, and the deviation in performance and lifespan between the battery cells may be minimized.

The effects of the present disclosure are not limited to the aforementioned effects, and other effects, which are not mentioned above, will be clearly understood by those skilled in the art from the claims.

### [Description of the Drawings]

FIG. 1 is a view illustrating a battery module in the related art.
FIG. 2 is a view illustrating a cross-section of the battery module in FIG. 1.
FIG. 3 is a view illustrating a battery module according to an embodiment of the present disclosure.
FIG. 4 is a view illustrating a state in which the battery module in FIG. 3 is disassembled.
FIG. 5 is a view illustrating a cross-section taken along line A-A' in FIG. 3.
FIG. 6 is a conceptual view illustrating a configuration in which the battery module according to the embodiment of the present disclosure is connected to a controller.

### [Mode for Invention]

Hereinafter, several exemplary embodiments of the present disclosure will be described in detail with reference to the accompanying drawings so that those with ordinary skill in the art to which the present disclosure pertains may easily carry out the exemplary embodiments. The present disclosure may be implemented in various different ways and is not limited to the embodiments described herein.

A part irrelevant to the description will be omitted to clearly describe the present disclosure, and the same or similar constituent elements will be designated by the same reference numerals throughout the specification.

In addition, a size and thickness of each constituent element illustrated in the drawings are arbitrarily shown for convenience of description, but the present disclosure is not limited thereto. In order to clearly describe several layers and regions, thicknesses thereof are enlarged in the drawings. In the drawings, the thicknesses of some layers and regions are exaggerated for convenience of description.

In addition, when one component such as a layer, a film, a region, or a plate is described as being positioned "above" or "on" another component, one component can be positioned "directly on" another component, and one component can also be positioned on another component with other components interposed therebetween. On the contrary, when one component is described as being positioned "directly above" another component, there is no component therebetween. In addition, when a component is described as being positioned "above" or "on" a reference part, the component may be positioned "above" or "below" the reference part, and this configuration does not necessarily mean that the component is positioned "above" or "on" the reference part in a direction opposite to gravity.

Throughout the specification, unless explicitly described to the contrary, the word "comprise/include" and variations such as "comprises/includes" or "comprising/including" will be understood to imply the inclusion of stated elements, not the exclusion of any other elements.

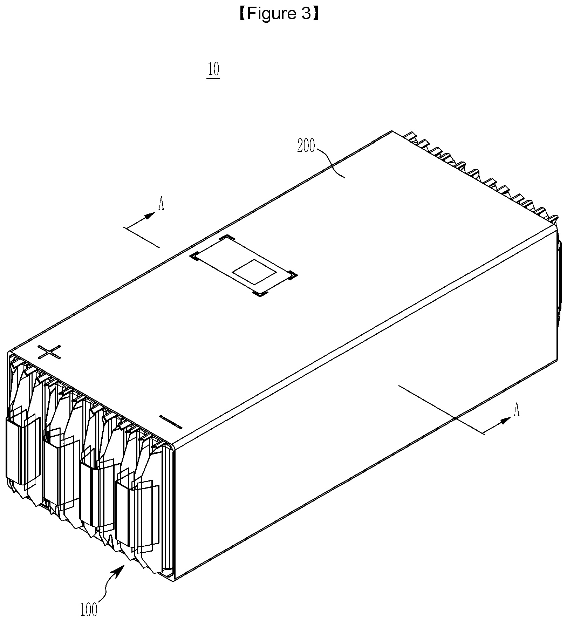

Hereinafter, a battery module according to an embodiment of the present disclosure will be described with reference to FIGS. 3 to 6.

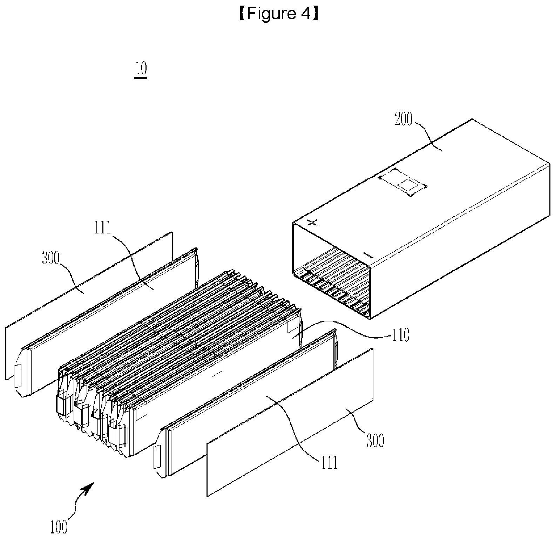

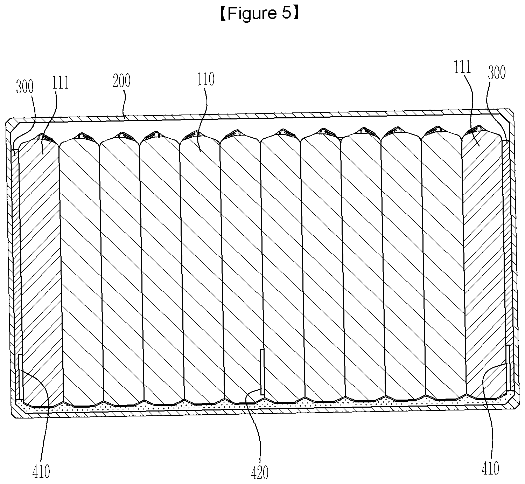

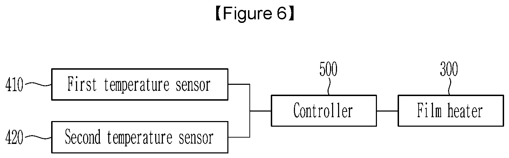

FIG. 3 is a view illustrating a battery module according to an embodiment of the present disclosure, FIG. 4 is a view illustrating a state in which the battery module in FIG. 3 is disassembled, FIG. 5 is a view illustrating a cross-section taken along line A-A' in FIG. 3, and FIG. 6 is a conceptual view illustrating a configuration in which the battery module according to the embodiment of the present disclosure is connected to a controller.

With reference to FIGS. 3 to 6, a battery module 10 according to an embodiment of the present disclosure includes a battery cell stack 100 made by stacking battery cells 110, a module case 200 configured to accommodate the battery cell stack 100, dummy battery cells 111 provided between the module case 200 and outermost peripheral battery cells, and film heaters 300 provided between the module case 200 and the dummy battery cells 111.

The battery cell 110 may be a secondary battery and configured as a pouch-type secondary battery. The battery cells 110 may be provided as a plurality of battery cells 110, and the plurality of battery cells 110 are stacked on one another and electrically connected to one another, thereby constituting the battery cell stack. The plurality of battery cells may each include an electrode assembly, a case configured to accommodate the electrode assembly, and electrode leads protruding from the electrode assembly. The electrode assembly may include a positive plate, a negative plate, a separator, and the like. The case may be configured as a laminated sheet configured to accommodate the electrode assembly and made of a resin layer and a metal layer. The electrode lead may protrude from the case and be electrically connected to the electrode assembly. The electrode leads may be provided at two opposite ends of the battery cell 110. According to the embodiment of the present disclosure, the battery cell has a structure in which the two electrode leads are opposite to each other and protrude from the two opposite ends of the battery cell 110.

According to the embodiment of the present disclosure, the module case 200 may have an upper surface, a lower surface, a left surface, and a right surface to accommodate the battery cell stack 100. However, the module case 200 may include a U-shaped module case, and an upper plate configured to cover an opened upper side of the U-shaped module case. Alternatively, the module case 200 may include an inverted U-shaped module case, and a lower plate configured to cover a lower side of the module case. The module case 200 may protect the battery cells 110 and the components connected to the battery cells 110 from an external physical impact.

The dummy battery cell 111 is provided between the module case 200 and the outermost peripheral battery cell 110 of the battery cell stack 100. The dummy battery cell 111 is a cell that is configured to be identical to the battery cell 110. The dummy battery cells 111 are disposed at two opposite ends of the battery cell stack 100. The dummy battery cell 111 is not electrically connected, such that the dummy battery cell 111 is not charged or discharged. The dummy battery cell 111 may serve to absorb a pressure generated when the battery cells 110 swell. In addition, the battery cell, which is disposed at the outermost side and thus is large in temperature deviation and pressure deviation with respect to the battery cell disposed at the center and causes deterioration in overall performance of the battery module 10 in the related art caused by the degradation of performance, is provided as the dummy battery cell 111 that is not charged or discharged. Therefore, even if the temperature deviation and the pressure deviation between the dummy battery cells 111 are increased, the increase in temperature deviation and pressure deviation may not affect the overall performance of the battery module 10. Further, because all the battery cells 110, which are electrically connected and charged or discharged, are adjacent to one another or the dummy battery cells 111, the battery cells 110 may receive the same pressure. That is, in the related art, because one surface of the battery cell 110 positioned at the outermost periphery necessarily adjoins other components (the module case 200 or the like) and is placed in a different environment from other battery cells 110 disposed inward, a difference in pressure occurs between these battery cells. In contrast, in the case of the present embodiment, the dummy battery cells 111 are provided as described above, all the battery cells 110 may receive the same pressure.

The film heater 300 is provided between the module case 200 and the dummy battery cell 111 of the battery cell stack 100. Therefore, the film heater 300 may raise the temperature of the dummy battery cell 111 adjacent to the film heater 300. The film heater 300 may be configured as a carbon element, a copper foil busbar, a silver busbar, a base PET film, and a Laminex film that are heat generation elements. The film having the above-mentioned structure may sometimes be used to improve heating efficiency.

Further, as illustrated in FIG. 5, in order to minimize the performance deviation between the battery cells 110 in accordance with the positions of the battery cells 110 in the battery module 10, a first temperature sensor 410 is mounted on the dummy battery cell 111, and a second temperature sensor 420 is mounted on the battery cell 110 positioned at the central portion. The temperature of the battery cell 110 and the temperature of the dummy battery cell 111 are monitored by the first and second temperature sensors, which may minimize the temperature deviation between the battery cells of the battery cell stack 100. That is, as illustrated in FIG. 6, the first and second temperature sensors 410 and 420 may be connected to a controller 500, and the controller 500 may acquire a first temperature measured by the first temperature sensor 410 and a second temperature measured by the second temperature sensor 420. When the controller 500 determines that the temperature of the dummy battery cell 111 is low on the basis of the measured temperature, the controller 500 may perform control to heat the film heater 300, thereby eliminating the temperature deviation between the battery cell 110 and the dummy battery cell 111.

In case that the temperature of the dummy battery cell 111 disposed outward and the temperature of the battery cell 110 at the central portion are monitored and controlled to be equal to each other, the temperatures of the battery cells 110 disposed between the dummy battery cells 111 and the battery cell 110 at the central portion may also be uniformly maintained. In addition, because the dummy battery cell 111 absorbs a pressure applied to the battery cells 110, the pressure applied to the battery cells 110 other than the dummy battery cell 111 may be uniformly maintained regardless of the positions of the battery cells 111 in the battery module 10. Because the temperature and the pressure may be uniformly maintained regardless of the positions of the battery cells 110 in the battery module 10 as described above, the cell characteristics and degradation rates of the battery cells 110 may be uniformly maintained. Therefore, the deviations between the characteristics and degradation rates between the battery cells 110 are reduced, it is possible to prevent a situation in which the problems occurring on some of the battery cells 110, particularly, the battery cells 110 disposed outward degrade the overall performance of the battery module 10.

Meanwhile, the present embodiment has been described in which the film heater 300 corresponds to an overall area of the dummy battery cell 111, but the present disclosure is not limited thereto. The size of the film heater 300 may be reduced within a range in which the film heater 300 does not overlap the electrode lead. In this case, the position of the film heater 300 may be close to a central portion of the dummy battery cell 111. In addition, the present embodiment has been described in which the film heater 300 is disposed only on the dummy battery cell 111, but the present disclosure is not limited thereto. Even when the film heater 300 is disposed between the battery cells 110 disposed inward, the film heater 300 may be controlled to locally raise the temperatures of the battery cells 110, as necessary. Further, the positions and sizes of the temperature sensors 410 and 420 may also be appropriately adjusted without being especially limited as long as the positions and sizes of the temperature sensors 410 and 420 are suitable to specify the temperatures of the battery cell 110.

The above-mentioned battery module 10 may be included in a battery pack. The battery pack may be a structure made by packing one or more battery modules according to the present embodiment while adding a cooling device, a battery management system (BMS), which manages a temperature or voltage of the battery, and the like.

The battery pack may be applied to various devices. Examples of such devices may include transportation means such as an electric bicycle, an electric vehicle, and a hybrid vehicle, but the present disclosure is not limited thereto, and may be applied to various devices that may use the battery module. These configurations may also belong to the scope of the present disclosure.

While the exemplary embodiments of the present disclosure have been illustrated and described above, the present disclosure is not limited to the specific exemplary embodiments, and various modifications can of course be made by those skilled in the art to which the present disclosure pertains without departing from the subject matter of the present disclosure as claimed in the claims. Further, the modifications should not be appreciated individually from the technical spirit or prospect of the present disclosure.

### <Description of Symbols>

100: Battery cell stack
110: Battery cell
111: Dummy battery cell
200: Module case
300: Film heater
410: First temperature sensor
420: Second temperature sensor

## Claims

1. A battery module comprising:
a battery cell stack in which a plurality of battery cells is stacked;
a module case configured to accommodate the battery cell stack;
a film heater provided between the module case and an outermost peripheral battery cell of the battery cell stack; and
a dummy battery cell disposed between the film heater and the outermost peripheral battery cell.

2. The battery module of claim 1, wherein:
the dummy battery cell has the same configuration as the plurality of battery cells and is not electrically connected to the plurality of battery cells.

3. The battery module of claim 2, wherein:
the dummy battery cell is not charged or discharged.

4. The battery module of claim 1, further comprising:
a first temperature sensor attached to the dummy battery cell.

5. The battery module of claim 4, further comprising:
a second temperature sensor attached to the battery cell disposed at an innermost side among the plurality of battery cells.

6. The battery module of claim 5, further comprising:
a controller configured to control a first temperature measured by the first temperature sensor and a second temperature measured by the second temperature sensor so that the first and second temperatures are equally maintained.

7. The battery module of claim 6, wherein:
the controller is connected to the film heater and heats the film heater on the basis of a result of monitoring the first and second temperatures.

8. The battery module of claim 1, wherein:
pressure applied to each of the plurality of battery cells are equal to one another.

9. The battery module of claim 1, wherein:
the film heater is configured as at least one a carbon element, a copper foil busbar, a silver busbar, a base PET film, and a Laminex film that are heat generation elements.

10. A battery pack comprising the battery module according to claim 1.
